# EUROPÄISCHE PATENTSCHRIFT

(11) **EP 0 517 129 B1**
(45) Veröffentlichungstag und Bekanntmachung des Hinweises auf die Patenterteilung: **10.05.1995**
(21) Anmeldenummer: 92109174.0
(22) Anmeldetag: 01.06.1992
(51) Int. Cl.: C04B 35/00, C08L 63/00, C08L 91/06, B22F 1/00

(54) **Formmasse zur Herstellung anorganischer Sintererzeugnisse**
Moldable mass for the production of sintered inorganic articles
Masse moulable pour la production de corps frittés inorganiques

(30) Priorität: 01.06.1991 DE 4118011
(43) Veröffentlichungstag der Anmeldung: 09.12.1992
(73) Patentinhaber: HOECHST AKTIENGESELLSCHAFT, 65926 Frankfurt am Main (DE)
(72) Erfinder: Bayer, Michael, W-8901 Lützelburg (DE); Nagl, Iris, W-8859 Burgheim (DE)

(56) Entgegenhaltungen:
- EP-A- 0 065 702
- EP-A- 0 400 778
- FR-A- 2 390 230
- DATABASE WPIL Week 9137, Derwent Publications Ltd., London, GB; AN 91-270343 & JP-A-3 177 482 (SUMITOMO ELECTRICAL INDUSTRIES LTD.)
- PATENT ABSTRACTS OF JAPAN vol. 16, no. 383 17. August 1992 & JP-A-41 22 360 (KORANSHA CO., LTD.)
- DATABASE WPIL Week 8737, Derwent Publications Ltd., London, GB; AN 87-259461 & JP-A-62 176 897 (SEIKO EPSON KK)
- DATABASE WPIL Week 8109, Derwent Publications Ltd., London, GB; AN 81-14787D & JP-A-55 165 655 (TOKYO SHIBAURA ELEC.CO.)

## Beschreibung

Die Erfindung bezieht sich auf eine keramische oder pulvermetallurgische Formmasse für Formkörper, die im Grünzustand gut bearbeitbar sind.

Ausgangsstoff für trockengepreßte Keramik- oder Pulvermetallerzeugnisse ist meist ein feinkörniges, schlechtfließendes Pulver, das zu einem verarbeitungsfertigen Granulat z.B. durch Sprühtrocknung einer Suspension (= Schlicker) oder durch einen anderen Granulierprozeß konfektioniert wird.

Mit Hilfe von Esterwachsdispersionen, die nach Abtrocknen der wäßrigen Dispergierphase dichte Filme bilden, lassen sich die Keramik- oder Metallprimärteilchen zu Granulaten hoher Festigkeit und guter Rieselfähigkeit binden. Beim anschließenden Verpressen der Granulate in gehärteten Matrizen treten hohe Reibungskräfte auf, die durch den Einsatz eines Gleitmittels auf ein Minimum reduziert werden müssen. Dabei haben die an der Werkzeugwand auftretenden Reibungskräfte den größten Anteil. Wachse verhalten sich im Vergleich zu anderen Hilfsmitteln in der Preßformgebung anders; bereits bei relativ niedrigem Preßdruck lassen sich verhältnismäßig hohe Preßdichten erzielen. Dieser Vorteil macht sich insbesondere bei größeren Teilen, für deren Herstellung eine hohe Preßkraft erforderlich ist, bemerkbar.

Esterwachse auf Basis Rohmontanwachs eignen sich aufgrund ihrer Fähigkeit, unter Druck zu fließen, als sogenannte "innere" Gleitmittel zwischen den Primärteilchen und als "äußere" Gleitmittel an der Grenze zur Werkzeugwand. Letzteres drückt sich in niedrigen Ausstoßkräften beim Ausformen des Grünteils aus der Form aus. Somit kann gleichzeitig die Standzeit der Preßmatrize verlängert werden.

Da der Wachsanteil während des Preßvorgangs eine bleibende Verformung erfährt, ist das "Nachfedern" des Preßteils nach dem Ausformen gering.

Eine weit verbreitete Variante der Formgebung von Rohteilen, deren Form sich nicht durch die vorstehenden Formgebungsverfahren erzielen läßt, ist der Schlickerguß. Hier geht man von einer meist wäßrigen Keramik- oder Metallpulversuspension aus, die in poröse Gipsformen zur Entwässerung eingefüllt wird. Das Ergebnis ist ein je nach Zusammensetzung mehr oder weniger festes Teil, das zum Zwecke des Transports oder der Grünbearbeitbarkeit mit Hilfe eines organischen Bindemittels auf der Basis von Wachsdispersionen verstärkt werden kann. Je nach Dosierung können so Grünfestigkeiten bis zu 2 N/mm² erreicht werden. Wachsdispersionen bieten zusätzlich den Vorteil, daß sie während der Scherbenbildung und während der anschließenden Entwässerung eine - im Vergleich zu löslichen Hilfsstoffen - schwach ausgeprägte Migrationsneigung hin zur Gipsform haben.

Es hat sich allerdings gezeigt, daß bei Grünkörpern, hergestellt aus keramischen oder pulvermetallurgischen Formmassen mit Wachsen als alleinigem Bindemittel, die Grünfestigkeit noch nicht in allen Fällen befriedigt.

Bekannt ist ein Binde- und Plastifizierungsmittel als hydrophobisierender Zusatz für basische, feuerfeste Massen und Formkörper auf Basis Dolomit (vgl. DE 37 43 217). Dieses Bindemittel besteht aus einem terpenischen Naturharzprodukt allein oder in Kombination mit einem Paraffinkohlenwasserstoff, einem natürlichen oder synthetischen Wachs, einem Kohlenwasserstoffharz, einem Polyethylen, einem Polyglykol, einem Polyglykolether, einem Polyglykolester, einem Wachsalkohol, einem Fettalkohol, einer Fettsäure, einem Polyvinylether oder einem Silikonharz. Die Bindung der Dolomitmasse erfolgt durch ein chemisches Bindungsmittel, wie beispielsweise einem Phosphat, Silikat, Borat, Carbonat, Sulfat, Chromat, Citrat, Lactat, Sulfonat und/oder Oxalat. Derartige Bindemittel sind jedoch für keramische und metallurgische Formmassen nicht immer erwünscht, da sie zusätzliche Anionen und Kationen bedingen.

EP-A-0 065 702 offenbart ein verfahren zur Herstellung von Formteilen aus Legierungsmaterial mit Kunststoffen, wobei ein Pulver der Legierung mit Hilfe von Thermoplasten, Duroplasten (u. a. Epoxidharze) und Gleitmitteln (u. a. Wachse) zu einer spitzfähigen ca. 30-50 Vol% des Kunststoffs enthaltenden Granulatmasse aufbereitet wird, die zu einem Formteil spritzgegossen wird.

Es wurde nun gefunden, daß eine keramische oder pulvermetallurgische Formmasse, welche neben einem Wachs noch ein bestimmtes Harz als Bindemittel enthält, sich gut verarbeiten läßt und Formkörper ergibt, die sich im Grünzustand gut bearbeiten lassen.

Die Erfindung betrifft somit eine Formmasse zur Herstellung anorganischer Sintererzeugnisse, bestehend aus
- 60 bis 99 Gew.-Teilen: eines Keramik- oder Metallpulvers,
- 0,1 bis 5 Gew.-Teilen: eines Wachses mit einem Tropfpunkt von 50 bis 100°C, einer Säurezahl von 5 bis 150, einer Verseifungszahl von 15 bis 160 und einer Dichte von 0,95 bis 1,20 g/cm³
- 0,1 bis 5 Gew.-Teilen: eines Epoxidharzes mit einem Epoxid-Äquivalentgewicht von 175 bis 4000 und einem Epoxidwert von 0,02 bis 0,57 und
- 0,1 bis 5 Gew.-Teilen: eines Härters.

Die erfindungsgemäße Formmasse enthält als Basis nichtmetallische anorganische oder metallische Pulver. Beispiele derartiger Pulver sind solche von Al₂O₃, AlN, Al₂TiO₅, B₄C, WC, SiC sowie Silikate. Als Metallpulver eignen sich solche von Eisen, Stahl, Werkzeugstahl, Wolfram, Kupfer, Nickel, Aluminium sowie deren Legierungen und intermetallischen Phasen. Die Pulver haben eine Korngroße von vorzugsweise kleiner 150 »m.

Weiterhin enthält die Formmasse ein Wachs. Dieses Wachs ist ein Naturwachs, ein voll- oder halbsynthetisches Wachs, ein Polyethylenwachs oder ein Amidwachs.

Bevorzugt ist das Wachs ein halbsynthetisches Wachs auf Basis Rohmontanwachs.

Das Wachs hat die folgenden Kenndaten:

| | |
|---|---|
| Tropfpunkt | 50 bis 100°C, vorzugsweise 55 bis 88°C, |
| Säurezahl | 5 bis 150, vorzugsweise 6 bis 35, |
| Verseifungszahl | 15 bis 160, vorzugsweise 15 bis 135, |
| Dichte | 0,95 bis 1,20,vorzugsweise 1,00 bis 1,20 g/cm³. |

Das bevorzugte halbsynthetische Wachs auf Basis Rohmontanwachs entsteht durch oxidative Bleichung von Rohmontanwachs und Verestern des so erhaltenen Saurewachses mit einem C₂- bis C₈-Diol. Wachse dieses Typs sind seit vielen Jahren im Handel erhältlich.

Falls die Formmasse in wäßriger Phase entsteht, wird mit Vorteil ein Wachs zusammen mit einem Emulgator eingesetzt, oder ein bereits einen Emulgator enthaltendes Wachs. Entsteht die erfindungsgemäße Formmasse aus nichtwäßriger Phase, so wird ein nichtemulgierbares Wachs bevorzugt.

Außerdem enthält die erfindungsgemäße Formmasse ein Epoxidharz. Es besitzt ein Epoxid-Äquivalentgewicht nach DIN 53 188 (EEW) von 175 bis 4000, vorzugsweise 190 bis 850 und einen Epoxidwert von 0,02 bis 0,57, vorzugsweise von 0,12 bis 0,53. Zur Bildung des Bindemittels wird das Epoxidharz mit einem Härter zur Reaktion gebracht. Der Härter ist entweder ein Polyester, ein Säureanhydrid oder ein Polyamin. Epoxidharz, Polyester, Säureanhydrid und Polyamin sind im Handel erhältlich und werden zumeist für die Herstellung von Versiegelungen und Beschichtungen eingesetzt.

Obwohl Harz und Härter bei normaler Temperatur nur langsam miteinander reagieren, enthält die erfindungsgemäße Formmasse das Epoxidharz bevorzugt in mikroverkapselter Form. Erst bei der Herstellung der Formkörper aus der Formmasse werden die Kapseln zerdrückt und ihr Inhalt mit dem Härter zusammengebracht, so daß beim nachfolgenden Tempern der Grünkörper das Harz ausgehärtet wird. Das Harz kann in der nachstehend geschilderten Weise mikroverkapselt werden.

Dazu wird das Harz in einem mit Wasser nicht mischbaren Lösemittel gelöst und in einer wäßrigen Gelatinelösung dispergiert. Beim Abkühlen der Dispersion auf weniger als 15°C geliert die Gelatine und hüllt die Tröpfchen der Harz-Lösung ein. Durch Zugabe von Alkali wird die Gelatine bei einem pH-Wert oberhalb 8 gehärtet. Die Kapseln haben in der Regel einen Durchmesser von 1 bis 100 »m.

Neben dem Wachs und dem Epoxidharz kann die erfindungsgemäße Formmasse noch andere Bestandteile enthalten, die ihre Herstellung erleichtern, beispielsweise Dispergiermittel, Entschäumer, Verflüssiger, Suspendier- und Lösemittel, und andere.

Die Formmasse hat folgende Zusammensetzung:

| Nichtmetallisches anorganisches | |
|---|---|
| Pulver oder Metallpulver | 60 bis 99, vorzugsweise 80 bis 98 Gew.-Teile, |
| Wachs | 0,1 bis 5, vorzugsweise 0,5 bis 2 Gew.-Teile, |
| Epoxidharz | 0,1 bis 5, vorzugsweise 0,5 bis 2 Gew.-Teile, |
| Härter | 0,1 bis 5, vorzugsweise 0,5 bis 2 Gew.-Teile, |
| Dispergiermittel | 0 bis 0,5, vorzugsweise 0 bis 0,3 Gew.-Teile, |
| Entschäumer | 0 bis 0,03, vorzugsweise 0 bis 0,02 Gew.-Teile, |
| Verflüssiger | 0 bis 0,5, vorzugsweise 0 bis 0,3 Gew.-Teile, |
| Suspendier- und Lösemittel | 0 bis 30, vorzugsweise 0 bis 20 Gew.-Teile. |

Zur Herstellung der erfindungsgemäßen Formmasse werden die Bestandteile untereinander gemischt und gegebenenfalls feinstzerkleinert. Dies geschieht vorzugsweise in Form einer Suspension (= Schlicker) in Wasser oder einem organischen Lösemittel. Das Wachs wird als Dispersion oder Lösung zugesetzt. Für die Zugabe des Epoxidharzes gibt es mehrere Möglichkeiten.
1. Ein wasserunlösliches Epoxidharz wird, in einem geeigneten Lösemittel gelöst, in einer wäßrigen Gelatinelösung mikroverkapselt und ist danach in Mikrokapseln mit einem mittleren Durchmesser von 1 bis 100 »m eingeschlossen. Der Härter für das Epoxidharz ist ein wasserdispergierbares Polyamin, welches sich zusammen mit einem emulgatorhaltigen Wachs in einer Dispersion befindet. Die Mikrokapseln und die Wachsdispersion werden vereinigt. Diese Dispersion wird den übrigen Bestandteilen der Formmasse zugefügt.
2. Ein wasserunlösliches Epoxidharz wird zusammen mit einem wasserunlöslichen Härter in Gegenwart des Wachses mikroverkapselt und die Dispersion den übrigen Bestandteilen zugefügt.
3. Ein wasserdispergierbares Epoxidharz, ein wasserdispergierbarer Härter und ein emulgatorhaltiges Wachs werden zusammen in Wasser dispergiert und die Dispersion weiterverarbeitet.

Die Zugabe des Epoxidharzes erfolgt vor oder bevorzugt nach einer eventuellen Feinstzerkleinerung. Der fertige Schlicker wird vom Suspensionsmittel befreit. Geschieht dies, wie bevorzugt, in einem Sprühtrocknungsverfahren, so erhält man eine granulatförmige Formmasse. Indessen ist es auch möglich, den Schlicker direkt in saugfähige Formen, vornehmlich aus Gips, zu Formkörpern zu vergießen.

Aus der granulatförmigen Formmasse werden Formkörper gepreßt, dabei werden Mikrokapseln mechanisch zerstört, so daß Harz und Härter zusammengebracht werden. Die Reaktion zwischen beiden Stoffen wird durch Erwärmen des Formkörpers auf eine Temperatur bis zu 200°C während einer Zeit von 0,1 bis 1 Stunde beschleunigt. Zusammen mit dem Wachs bildet das Epoxidharz danach ein festigkeitsteigerndes Bindemittel. Die Wärmebehandlung zur Aktivierung des Bindemittels kann bei wasserhaltigen Formmassen, welche extrudiert werden, auch in der Weise geschehen, daß die Wärme im Inneren des Formkörpers durch Mikrowellen erzeugt wird.

Die mit der erfindungsgemäßen Formmasse erzielte Trockenbiegefestigkeit beträgt ca. 19 N/mm². Sie kann bereits nach einer Temperzeit von weniger als einer Stunde erreicht werden.

Bei der Trennung der reaktiven Binderbestandteile mittels Mikroverkapselung des einen erhält die erfindungemäße Formmasse eine sehr gute Lagerbeständigkelt. Die Grünfestigkeit der daraus hergestellten Formkörper kann den Erfordernissen angepaßt werden.

Die nachstehenden Beispiele sollen die Erfindung erläutern.

### Beispiel 1

80 Gew.-Teile Al₂O₃-Pulver, 2 Gew.-Teile emulgatorhaltiges Esterwachs auf Rohmontanwachsbasis (TP 80°C, SZ 30, VZ 100, Dichte 1,01), 8 Gew.-Teile Kapseln, enthaltend eine 40 %ige Lösung eines Epoxidharzes (EEW 750 bis 830, Epoxidwert 0,12 bis 0,133) in n-Butylacetat, 3 Gew.-Teile Polyamin (aliphatisch, Hₐₖₜᵢᵥ-Äquivalentgewicht 160), 20 Gew.-Teile Wasser und 0,1 Gew.-Teile Polyacrylat (Ammoniumpolyacrylat pH 7) wurden zu einem Schlicker verarbeitet.

Dazu wurde zunächst das Wachs in dem 95°C warmen Wasser dispergiert. In der auf Raumtemperatur abgekühlten Dispersion wurde das Polyamin gelöst. Anschließend wurden die Kapseln in der Dispersion durch Rühren homogen verteilt. Nach Zugabe des Polyacrylats, welches als Dispergierhilfsmittel diente, wurde das Al₂O₃-Pulver eingerührt. Der erhaltene Schlicker wurde durch Sprühtrocknung in eine granulatförmige Formmasse überführt.

Aus dieser Formmasse hergestellte Probekörper hatten - ungetempert - eine Trockenbiegefestigkeit nach DIN 51 030 von 2 bis 8 N/mm².

### Beispiel 2

0,4 Gew.-Teile Esterwachs auf Rohmontanwachsbasis (TP 60°C, SZ 4, VZ 10, Dichte 1,20) wurden in 5 Gew.-Teilen 40°C warmem Ethanol gelöst. Zur gleichen Zeit wurden 0,4 Gew.-Teile Epoxidharz (EEW 750 bis 830, Epoxidwert 0,12 bis 0,133) und 0,4 Gew.-Teile Phthalsäureanhydrid in 15 Gew.-Teilen n-Butylacetat gelöst. Die beiden Lösungen wurden bei 20°C vereinigt. In diese vereinigte Lösung wurden 80 Gew.-Teile Carbonyleisenpulver eingerührt und der erhaltene Schlicker durch Sprühtrocknung in eine granulatförmige Formmasse überführt.

Aus dieser Formmasse wurden Probekörper gepreßt und bei 150°C 20 Minuten getempert. Die Trockenbiegefestigkeit betrug ca. 19 N/mm².

### Beispiel 3

2 Gew.-Teile emulgatorhaltiges Esterwachs auf Rohmontanwachsbasis (TP 80°C, SZ 30, VZ 100, Dichte 1,01) wurden unter Rühren in 20 Gew.-Teilen Wasser von 90°C dispergiert. In diese Dispersion wurden bei 20°C 2 Gew.-Teile Epoxidharz (EEW 190 bis 200, Epoxidwert 0,50 bis 0,53) und 2 Gew.-Teile Polyamin (aliphatisch, Hₐₖₜᵢᵥ -Äquivalent 160) eingerührt. Anschließend wurden 40 Gew.-Teile Al₂O₃-Pulver zugegeben. Nach Zugabe von 0,1 Gew.-Teilen Polyacrylat (Ammoniumpolyacrylat pH 7) wurden weitere 40 Gew.-Teile Al₂O₃-Pulver eingearbeitet. Der erhaltene Schlicker wurde in Gipsformen gefüllt und entwässert. Anschließend wurden die so erhaltenen Grünkörper durch eine 10-minütige Temperung bei 100°C verfestigt. Die Grünkörper hatten eine Trockenbiegefestigkeit von ca. 7 N/mm² und konnten gut spanabhebend bearbeitet werden.

### Beispiel 4

4 Gew.-Teile Kapseln, enthaltend 0,8 Gew.-Teile Epoxidharz (EEW 750 bis 830, Epoxidwert 0,12 bis 0,133) und 0,8 Gew.-Teile Phthalsäureanhydrid in 2,4 Gew.-Teilen n-Butylacetat, wurden in eine bei 90°C aus 4 Gew.-Teilen emulgatorhaltigem Esterwachs auf Rohmontanwachsbasis (TP 80°C, SZ 30, VZ 100, Dichte 1,01) und 20 Gew.-Teilen Wasser hergestellten Dispersion bei 20°C verteilt. Anschließend wurden unter Rühren 80 Gew.-Teile Al₂O₃-Pulver zugegeben und der entstandene Schlicker durch Sprühtrocknung in eine granulatförmige Formmasse überführt.

Probekörper aus dieser Formmasse hatten nach einer 30-minütigen Temperung bei 150°C eine Trockenbiegefestigkeit von 2 bis 7 N/mm² und ließen sich gut spanabhebend bearbeiten.

### Beispiel 5

1 Gew.-Teil emulgatorhaltiges Esterwachs auf Rohmontanwachsbasis (TP 80°C, SZ 30, VZ 100, Dichte 1,01) wurden in 10 Gew.-Teilen Wasser bei 90°C dispergiert und diese Dispersion mit 90 Gew.-Teilen Al₂O₃-Pulver, 1 Gew.-Teil Epoxidharz (EEW 190 bis 200, Epoxidwert 0,50 bis 0,53), 1 Gew.-Teil Polyamin (aliphatisch, Hₐₖₜᵢᵥ - Äquivalentgewicht 160) und 1 Gew.-Teil Hydroxyethylcellulose (Typ 100000, als Viskositätsregler) zu einer plastischen Masse verknetet. Die Masse wurde zu Probekörpern extrudiert, welche durch Warmluft oder Einwirkung von Mikrowellen auf 90°C erhitzt wurden. Sie besaßen eine Trockenbiegefestigkeit von 8 N/mm² und ließen sich gut spanabhebend bearbeiten.

## Patentansprüche

1. Formmasse zur Herstellung anorganischer Sintererzeugnisse, bestehend aus
60 bis 99 Gew.-Teilen eines Keramik- oder Metallpulvers,
0,1 bis 5 Gew.-Teilen eines Wachses mit einem Tropfpunkt von 50 bis 100°C, einer Säurezahl von 5 bis 150, einer Verseifungszahl von 15 bis 160 und einer Dichte von 0,95 bis 1,20,
0,1 bis 5 Gew.-Teilen eines Epoxidharzes mit einem Epoxid-Äquivalentgewicht von 175 bis 4000 und einem Epoxidwert von 0,02 bis 0,57 und
0,1 bis 5 Gew.-Teilen eines Härters.

2. Formmasse nach Anspruch 1, dadurch gekennzeichnet, daß sie zusätzlich Dispergiermittel, Entschäumer, Verflüssiger und Suspendier- und Lösemittel enthält.

3. Formmasse nach Anspruch 1, dadurch gekennzeichnet, daß sie das Epoxidharz in Form von Mikrokapseln enthält.

4. Formmasse nach Anspruch 1, dadurch gekennzeichnet, daß das Wachs ein emulgatorhaltiges Esterwachs auf Rohmontanwachsbasis ist.

5. Verwendung der Formmasse nach Anspruch 1 zur Herstellung von keramischen oder pulvermetallurgischen Formteilen.

## Claims

1. A molding composition for the production of inorganic sintered products, consisting of
60 to 99 parts by weight of a ceramic powder or metal powder,
0.1 to 5 parts by weight of a wax having a dropping point of 50 to 100°C, an acid number of 5 to 150, a hydrolysis number of 15 to 160 and a density of 0.95 to 1.20 g/cm³,
0.1 to 5 parts by weight of an epoxy resin having an epoxide equivalent weight of 175 to 4000 and an epoxide value of 0.02 to 0.57 and
0.1 to 5 parts by weight of a curing agent.

2. A molding composition as claimed in claim 1, which additionally contains dispersing agents, foam suppressants, liquefying agents and suspending agents and solvents.

3. A molding composition as claimed in claim 1, which contains the epoxy resin in the form of microcapsules.

4. A molding composition as claimed in claim 1, wherein the wax is an emulsifier-containing ester wax based on crude montan wax.

5. The use of a molding composition as claimed in claim 1 for the production of ceramic or powder-metallurgical shaped components.

## Revendications

1. Matière moulable pour la préparation de produits frittés inorganiques, constituée par
60 à 99 parties en poids d'une poudre métallique ou en céramique,
0,1 à 5 parties en poids d'une cire ayant un point de goutte compris entre 50 et 100°C, un indice d'acide compris entre 5 et 150, un indice de saponification compris entre 15 et 160 et une densité comprise entre 0,95 et 1,20,
0,1 à 5 parties en poids d'une résine époxy ayant un équivalent en poids d'époxyde compris entre 175 et 4000 et une valeur ou indice d'époxyde ("Epoxidwert") compris entre 0,02 et 0,57 et
0,1 à 5 parties en poids d'un durcisseur.

2. Matière moulable selon la revendication 1, caractérisée en ce qu'elle contient en plus un agent de dispersion, un agent anti-mousse, un agent fluidifiant, un agent de mise en suspension et un solvant.

3. Matière moulable selon la revendication 1, caractérisée en ce qu'elle contient la résine époxy sous la forme de micro-capsules.

4. Matière moulable selon la revendication 1, caractérisée en ce que la cire est une cire ester, contenant un émulsionnant, à base de cire de lignite brute.

5. Utilisation de la matière moulable selon la revendication 1 pour la préparation de pièces moulées en céramique ou en poudre métallurgique.
